# EUROPÄISCHE PATENTANMELDUNG

(11) **EP 4 202 267 A1**
(43) Veröffentlichungstag der Anmeldung: **28.06.2023**
(21) Anmeldenummer: 22214155.8
(22) Anmeldetag: 16.12.2022
(51) Int. Cl.: F16K 7/12, F16K 41/10

(54) **STÖPSEL-DIAPHRAGM FÜR PROZESSVENTIL**

(30) Priorität: 22.12.2021 DE 102021134320
(71) Anmelder: Gemü Gebr. Müller Apparatebau GmbH & Co. Kommanditgesellschaft, 74653 Ingelfingen (DE)
(72) Erfinder: Baumgärtner, Michael, 74677 Dörzbach (DE); Frankenbach, Klaus, 74670 Forchtenberg (DE)
(74) Vertreter: DREISS Patentanwälte PartG mbB

(57) **Zusammenfassung**

Es wird ein Plug-Diaphragm (2) für ein Prozessventil (4) bereitgestellt, welches umfasst: einen ersten Körper (100) mit einem einer Trockenseite (T) der Plug-Diaphragm (2) abgewandten distalen Abschnitt (102) und einem Halteabschnitt (104); und einen zweiten Körper (200) mit einem inneren Abschnitt (204), welcher den Halteabschnitt (104) hält, indem der innere Abschnitt (204) den Halteabschnitt (104) formschlüssig umgibt, mit einem sich in Richtung der Trockenseite (T) an den inneren Abschnitt (204) anschließenden und zur Trockenseite (T) hin gekrümmten Membranabschnitt (206), und mit einem lateralen, sich nach außen hin an den Membranabschnitt (206) anschließenden Klemmabschnitt (208).

## Beschreibung

Die Erfindung betrifft ein Plug-Diaphragm für ein Prozessventil und ein Prozessventil.

Es ist bekannt, die Schnittstellen von mehrteiligen Plug-Diaphragms mit einer zusätzlichen Elastomer-Dichtung oder mit einer mehrteiligen Vorrichtung unter Federvorspannung abzudichtet.

Die der Erfindung zugrundeliegenden Probleme werden durch ein Plug-Diaphragm für ein Prozessventil gemäß dem Anspruch 1 und durch ein Prozessventil gemäß einem nebengeordneten Anspruch gelöst.

Ein Aspekt der Beschreibung betrifft den folgenden Gegenstand: Ein Plug-Diaphragm für ein Prozessventil umfassend einen ersten Körper mit einem einer Trockenseite der Plug-Diaphragm abgewandten distalen Abschnitt und einem Halteabschnitt; und einen zweiten Körper mit einem inneren Abschnitt, welcher den Halteabschnitt hält, indem der innere Abschnitt den Halteabschnitt formschlüssig umgibt, mit einem sich in Richtung der Trockenseite an den inneren Abschnitt anschließenden und zur Trockenseite hin gekrümmten Membranabschnitt, und mit einem lateralen, sich nach außen hin an den Membranabschnitt anschließenden Klemmabschnitt.

Durch den Formschluss wird die Stabilität der Plug-Diaphragm erhöht. Vorteilhaft können für den ersten und zweiten Körper nicht nur unterschiedliche Materialien eingesetzt werden, was Vorteile für die jeweilige Funktionsauslegung ergibt. Auch können aufwendige mehrteilige Konstruktionen entfallen, was insbesondere die Montage und Demontage vereinfacht. Durch die Reduktion der Teileanzahl und den vereinfachten Montageaufwand, kann der Kunde Komponenten ohne Risiko tauschen. Somit wird die Prozesssicherheit erhöht. Des Weiteren ist es möglich, eine spaltfreie Verbindung der beiden Körper herzustellen, was die Abreinigbarkeit verbessert.

Ein vorteilhaftes Beispiel zeichnet sich dadurch aus, dass der distale Abschnitt eine Befestigungskontur, insbesondere ein Außengewinde, umfasst, welche zur Befestigung eines Tauschteils ausgebildet ist.

Vorteilhaft wird es so möglich, das Tauschteil auf einfache Art und Weise zu ersetzen, womit die Wartung des Prozessventils verbessert wird.

Ein vorteilhaftes Beispiel zeichnet sich dadurch aus, dass ein Anschlagbereich des ersten Körpers für das Tauschteil vorgesehen ist, welcher insbesondere metallisch ausgebildet ist.

Ein Vorteil besteht darin, dass das Tauschteil gegen den metallischen Festanschlag geschraubt werden kann. Somit steigt das Drehmoment in einen handhabbaren Bereich. Ebenso ist das Potential für Fehler gesenkt und die Teileanzahl reduziert.

Ein vorteilhaftes Beispiel zeichnet sich dadurch aus, dass der Anschlagbereich gegenüber einem den Anschlagbereich umgebenden Dichtabschnitt des zweiten Körpers versetzt abschließt, insbesondere zurückspringt.

Vorteilhaft wird der zweite Körper mit dem Dichtabschnitt dazu verwendet, die Dichtheit zwischen dem Tauschteil und dem Plug-Diaphragm zu verbessern.

Ein vorteilhaftes Beispiel zeichnet sich dadurch aus, dass ein Dichtring, insbesondere aus PTFE oder TPE, lateral zwischen dem ersten Körper und dem Tauschteil angeordnet ist.

Vorteilhaft wird durch den Dichtring die Dichtheit zwischen dem Tauschteil und dem Plug-Diaphragm verbessert.

Ein vorteilhaftes Beispiel zeichnet sich dadurch aus, dass der innere Abschnitt des zweiten Körpers eine äußere Angriffskontur für ein Werkzeug aufweist.

Vorteilhaft kann somit der zweite Körper mit einem Werkzeug abgestützt werden, während das Tauschteil zum Anschließen oder Entfernen gedreht wird. Dadurch kann eine Belastung im Bereich des Membranabschnitts oder der Klemmabschnitts reduziert werden.

Ein vorteilhaftes Beispiel zeichnet sich dadurch aus, dass das Tauschteil wenigstens eine der folgenden Außenkonturen umfasst: eine Regelkontur, einen Schließkontur und eine Verschleißschutzkontur.

Vorteilhaft ist es somit beispielsweise möglich, mit dem Tauschteil ein Regelventil oder ein Sitzventil zu realisieren.

Ein vorteilhaftes Beispiel zeichnet sich dadurch aus, dass der distale Abschnitt des ersten Körpers wenigstens eine der folgenden Außenkonturen umfasst: eine Regelkontur, eine Schließkontur und eine Verschleißschutzkontur.

Der distale Abschnitt erlaubt es somit, ein Regelventil oder ein Sitzventil zu realisieren. Da die beiden Körper aus unterschiedlichen Materialen fertigbar sind, kann nun beispielsweise für den die Regelkontur aufweisenden ersten Körper ein Material verwendet werden, dessen Dimensionen sich bei Temperaturunterschieden weniger stark verändern, also beispielsweise eine Metalllegierung. Vorteilhaft ändert sich durch geringere Temperaturausdehnungskoeffizienten im Bereich der Regelkontur das Regelverhalten des Prozessventils weniger stark. Die Regeleigenschaften werden also verbessert.

Ein vorteilhaftes Beispiel zeichnet sich dadurch aus, dass eine trockenseitige Öffnung der Plug-Diaphragm zu einem zum Anschluss einer Antriebsstange ausgebildeten Befestigungsabschnitt, insbesondere zu einem Innengewinde, führt.

Ein vorteilhaftes Beispiel zeichnet sich dadurch aus, dass der Befestigungsabschnitt zumindest abschnittsweise in dem ersten Körper ausgeführt ist.

Vorteilhaft wird damit die Kraft in den zur Nassseite hin orientierten ersten Körper eingeleitet. Insbesondere in einer Ausführung des ersten Körpers als Metalllegierung ergeben sich Vorteile bei der Kraftübertragung.

Ein vorteilhaftes Beispiel zeichnet sich dadurch aus, dass der erste Körper aus einer Metalllegierung, insbesondere Edelstahl gefertigt ist, wobei der zweite Körper aus einem Kunststoff, beispielsweise PTFE, Polytetraflourethylen, oder TFM gefertigt ist.

Vorteilhaft wird damit ein Plug-Diaphragm bereitgestellt, bei dem auf weitere medienberührende Komponenten, die beispielsweise aus einem Elastomer bestehen, verzichtet werden kann. Insbesondere PTFE oder TFM weisen eine hohe Chemikalienbeständigkeit, einen breiten Temperatureinsatzbereich, Beständigkeit gegen Versprödung, Alterungsbeständigkeit sowie die hohe Reinheit auf. Verunreinigungen des Prozessfluids werden also reduziert.

Ein vorteilhaftes Beispiel zeichnet sich dadurch aus, dass zumindest abschnittsweise zwischen dem ersten Körper und dem zweiten Körper eine Zwischenschicht aus PFA, Perfluoroalkoxy, angeordnet ist.

PFA haftet gut auf Edelstahl. Des Weiteren verbinden sich PFA und PFTE/TPE beim Sintern.

In den Figuren zeigen:
- Figuren 1a, 4a, 5a, und 7a: jeweils ein Plug-Diaphragm in einer perspektivischen Ansicht;
- Figuren 1b, 4b, 5b, 6 und 7b: jeweils ein Plug-Diaphragm in einer Längsschnittansicht;
- Figur 2: ein beispielhaftes Prozessventil; und
- Figur 3: eine alternative Ausführung des Plug-Diaphragm aus Figur 2.

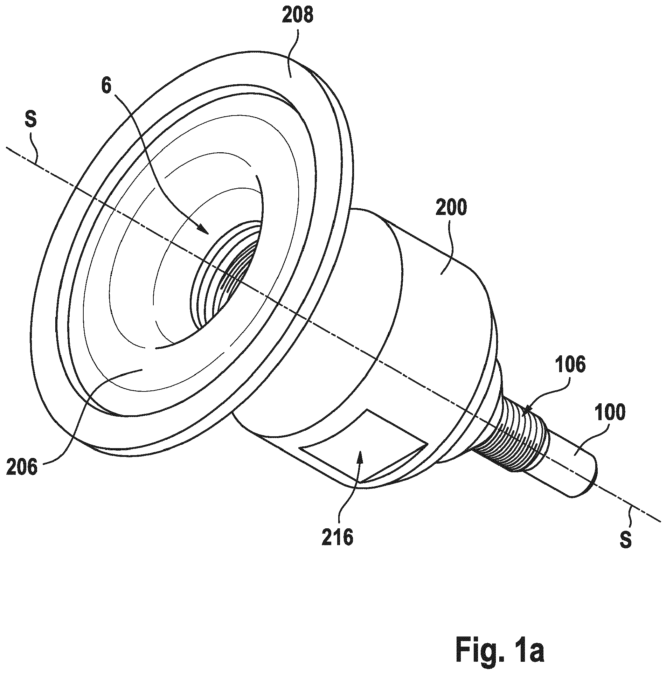

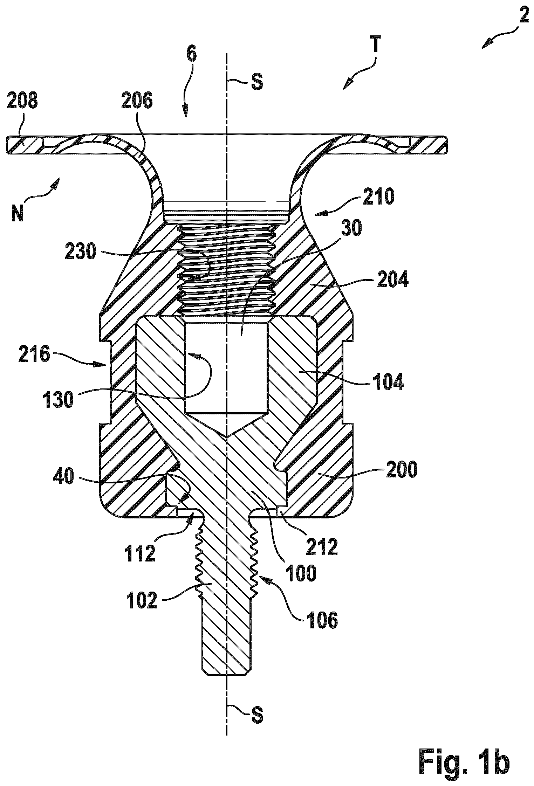

Figuren 1a und 1b zeigen ein Plug-Diaphragm 2 für ein Prozessventil. Ein erster Körper 100 umfasst einen einer Trockenseite T der Plug-Diaphragm 2 abgewandten distalen Abschnitt 102 und einen Halteabschnitt 104. Ein zweiter Körper 200 umfasst einen inneren Abschnitt 204, welcher den Halteabschnitt 104 hält, indem der innere Abschnitt 204 den Halteabschnitt 104 formschlüssig umgibt. Der zweite Körper 200 umfasst einen sich in Richtung der Trockenseite T an den inneren Abschnitt 204 anschließenden und zur Trockenseite T hin gekrümmten Membranabschnitt 206. Der Körper 200 umfasst einen lateralen, sich nach außen hin an den Membranabschnitt 206 anschließenden Klemmabschnitt 208.

Der innere Abschnitt 204 und der Halteabschnitt 104 greifen derart ineinander, dass der erste Körper 100 und der zweite Körper 200 starr zueinander festgelegt sind.

Die Plug-Diaphragm 2 ist auch als Stopfenmembran oder als Plug-Membran oder als Plug-Diaphragma oder als Stopfen-Diaphragma bezeichenbar. Der Membranabschnitt 206 ist torusmantel-ähnlich ausgebildet und umfasst im gezeigten Längsschnitt der Plug-Diaphragm 2 eine einzige Krümmung bzw. Wölbung hin zur Trockenseite T. Der Membranabschnitt 206 verbindet den äußeren lateralen Klemmabschnitt 208 mit dem inneren Abschnitt 204 oder Stopfen, welcher ausgehend von einem Verbindungsabschnitt 210 sich vom der Trockenseite T wegweisend erstreckt. In dem Verbindungsabschnitt 210 trifft der Membranabschnitt 206 zylindermantelförmig, d.h. nahezu parallel zur Stellachse S, auf den inneren Abschnitt 204. Ausgehend von dem Verbindungsabschnitt 210 und wegweisend von der Trockenseite T - also hinweisend zu einer Nassseite N - weist die Plug-Diaphragm 2 bzw. der innere Abschnitt 204 des zweiten Körpers 200 zumindest abschnittsweise eine Zunahme des Außenquerschnitts auf.

Die Krümmung bzw. Wölbung des Membranabschnitts 206 in dem Längsschnitt der Plug-Diaphragm hin zur Trockenseite (T) ist in einem nicht kraftbelasteten Zustand des Membranabschnitts 206 vorhanden.

Der innere Abschnitt 204 ist aus als Plug-Abschnitt oder Stopfenabschnitt bezeichenbar. Der innere Abschnitt 204 ist näher bei der Stellachse S angeordnet als äußere Klemmabschnitt 208. Von der Trockenseite T weggewandt vergrößert sich der Außendurchmesser des inneren Abschnitts 204 ausgehend von dem Verbindungsabschnitt 210 zumindest abschnittsweise.

Der Klemmabschnitt 208 dient zum Verspannen der Plug-Diaphragm zwischen zwei Gehäuseteilen des Prozessventils. Damit wird die Dichtheit nach außen hergestellt und die Trockenseite T von der Nassseite N getrennt.

Der Membranabschnitt 206 erlaubt durch seine Formgebung eine Bewegung des inneren Abschnitts 204 entlang der Stellachse S mittels einer von einem Ventilantrieb angetriebenen Antriebsstange bei feststehendem Klemmabschnitt 208.

Eine Befestigungskontur 106 stellt eine Befestigungsschnittstelle für ein Tauschteil bereit.

Zur Herstellung der Plug-Diaphragm 2 wird zunächst der erste Körper 100 beispielsweise durch spanende Bearbeitung eines Rohkörpers hergestellt. Der zweite Körper 200 wird durch Sintern hergestellt, wobei der fertig gespante erste Körper 100 bei dem Sintervorgang zu einer Sinterform feststehend angeordnet ist. Beim Sintern wird beispielsweise PFTE-Pulver oder TPE-Pulver in eine Sintervorrichtung eingebracht, in der bereits der erste Körper 100 angeordnet ist. Unter erhöhtem Druck und erhöhter Temperatur wird das PFTE-Pulver oder TPE-Pulver gesintert und umgibt in Form des inneren Abschnitts 204 im Bereich des Halteabschnitts 104 den ersten Körper 100 formschlüssig.

Der Formschluss zwischen den beiden Körpern 100 und 200 wird dadurch erreicht, dass der erste Körper 100 in dem Halteabschnitt 104 entlang der Stellachse S wenigstens eine rückspringende oder vorspringende Kontur und lotrecht zur Stellachse S wenigstens eine rückspringende oder vorspringende Kontur aufweist. In die vorgenannten Konturen greift das gesinterte Material des zweiten Körpers 200 ein und legt somit beide Körper 100 und 200 zueinander fest.

Ein Anschlagbereich 112 des ersten Körpers 100 für das Tauschteil 300 vorgesehen ist, welcher insbesondere metallisch ausgebildet ist. Der Anschlagbereich 112 schließt gegenüber einem den Anschlagbereich 112 umgebenden Dichtabschnitt 212 des zweiten Körpers 200 versetzt ab, springt insbesondere gegenüber dem Dichtabschnitt 212 des zweiten Körpers 200 zurück.

Der innere Abschnitt 204 des zweiten Körpers 200 umfasst eine äußere Angriffskontur 216 für ein Werkzeug.

Eine trockenseitige Öffnung 6 der Plug-Diaphragm 2 führt zu einem zum Anschluss einer Antriebsstange 28 ausgebildeten Befestigungsabschnitt 30, insbesondere zu einem Innengewinde. Im Beispiel der Figuren 1a+b, 2, 3, 4a+b ist der Befestigungsabschnitt 30 ausschließlich in dem ersten Körper 100 ausgeführt. Der Befestigungsabschnitt 30 ist sowohl in dem ersten Körper 100 als auch in dem zweiten Körper 200 ausgeführt. Beispielsweise wird das Innengewinde durch einen ersten Abschnitt 130 des ersten Körpers 100 und einen sich anschließenden zweiten Abschnitt 230 des zweiten Körpers 200 gebildet.

In einer Weiterbildung ist ein Teil des Befestigungsabschnitts 30 in dem Körper 200 ausgeführt. Der Befestigungsabschnitt 30 ist also zumindest abschnittsweise in dem ersten Körper 100 ausgeführt.

Der erste Körper 100 ist aus einer Metalllegierung, insbesondere Edelstahl gefertigt. Der zweite Körper 200 ist aus einem Kunststoff, beispielsweise PTFE, Polytetraflourethylen, oder TFM gefertigt.

In einem Beispiel ist zumindest abschnittsweise zwischen dem ersten Körper 100 und dem zweiten Körper 200 eine Zwischenschicht aus PFA, Perfluoroalkoxy, angeordnet.

Ein Übergangsbereich 40 zwischen dem ersten Körper 100 und dem zweiten Körper 200 wird über den Formschluss zwischen den beiden Körpern 100 und 200 abgedichtet. In anderen Worten führt der Formschluss zwischen den beiden Körpern 100 und 200 dazu, dass die beiden Körper 100 und 200 derart eng aneinander anliegen, dass über den Übergangsbereich 40 von außen kein Prozessmedium in die Plug-Diaphragm 2 eintreten kann.

Die obigen Ausführungen zu Figur 1a+b sind auf die Beispiele der nachfolgenden Figuren übertragbar.

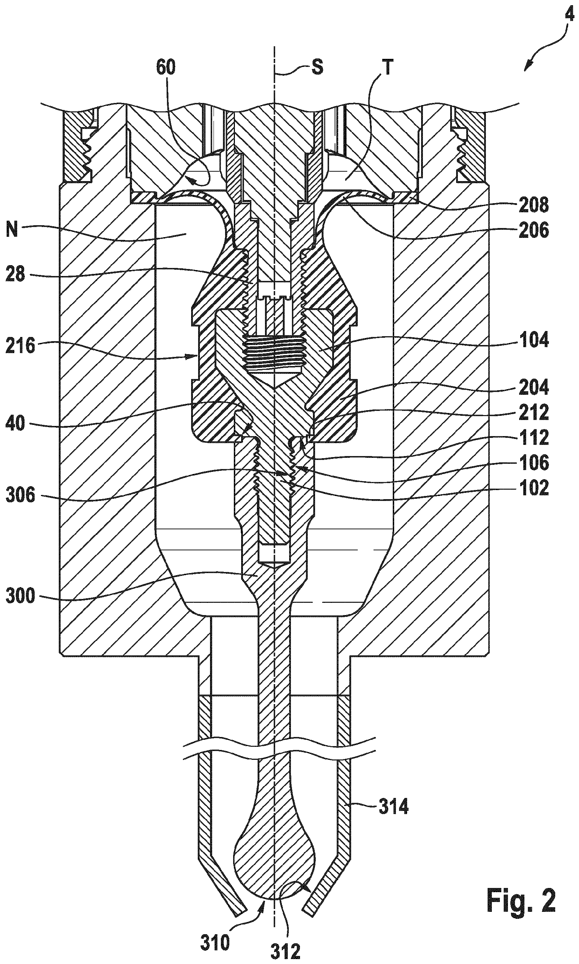

Figur 2 zeigt in einem schematischen Schnitt das Prozessventil 4 als Nadelventil. Der distale Abschnitt 102 des ersten Körpers 100 umfasst die Befestigungskontur 106, insbesondere ein Außengewinde, umfasst, welche zur Befestigung des Tauschteils 300 ausgebildet ist. Eine Befestigungskontur 306 des Tauschteils 300, insbesondere ein Innengewinde, wirkt mit der Befestigungskontur 106 zur Festlegung des Plug Diaphragm 2 und des Tauschteils 300 zusammen. Alternativ können auch Außengewinde und Innengewinde getauscht werden, was bedeutet, dass der distale Abschnitt 102 ein Innengewinde aufweist und das Tauschteil ein entsprechendes in das Innengewinde eingreifendes Außengewinde.

Der Dichtabschnitt 212 des zweiten Körpers 200 ist so weit nach innen gezogen, dass dieser zwischen dem äußeren Bereich des Tauschteils 300 und dem ersten Körper 100 verklemmt wird. Der Dichtabschnitt 212 des zweiten Körpers 200 ist also zwischen dem ersten Körper 100 und dem Tauschteil 300 angeordnet.

Im Beispiel der Figur 2 ist ein Füllnadelventil gezeigt. Als Austauschteil 300 ist eine entlang der Stellachse bewegliche Nadelstange vorgesehen, an deren Ende sich die Schließkontur 310 befindet, welche mit einer Sitzkontur 312 zusammenwirkt. Das Austauschteil 300 ist innerhalb eines mit Prozessfluid gefüllten Nadelgehäuses 314 beweglich. Das Nadelgehäuse kann beispielsweise in Verpackungseinheiten eingeführt werden, um dort das Prozessfluid über die distale Öffnung des Nadelgehäuses in die Verpackungseinheit einzubringen.

Das Tauschteil 300 umfasst vorliegend also die Schließkontur 310. In anderen nicht gezeigten Ausführungsformen umfasst das Tauschteil alternativ oder zusätzlich wenigstens eine der folgenden Außenkonturen: eine Regelkontur und eine Verschleißschutzkontur.

Des Weiteren ist in Figur 2 eine feststehende Unterstützungskontur 60 gezeigt, an die sich der Membranabschnitt 206 je nach Stellposition entlang der Stellachse S abschnittsweise anlegen kann.

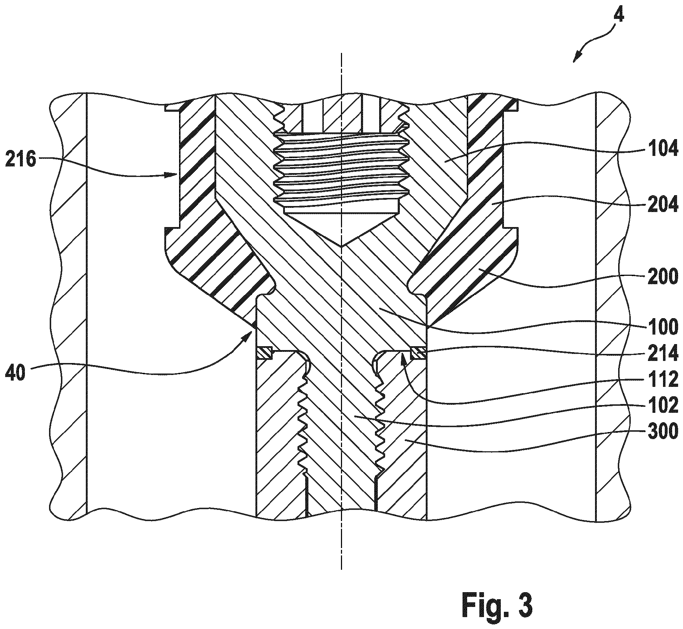

In Figur 3 ist eine Alternative zum Dichtabschnitt 212 aus Figur 2 gezeigt. Ein Dichtring 214, insbesondere aus PTFE oder TPE, ist lateral zwischen dem ersten Körper 100 und dem Tauschteil 300 angeordnet.

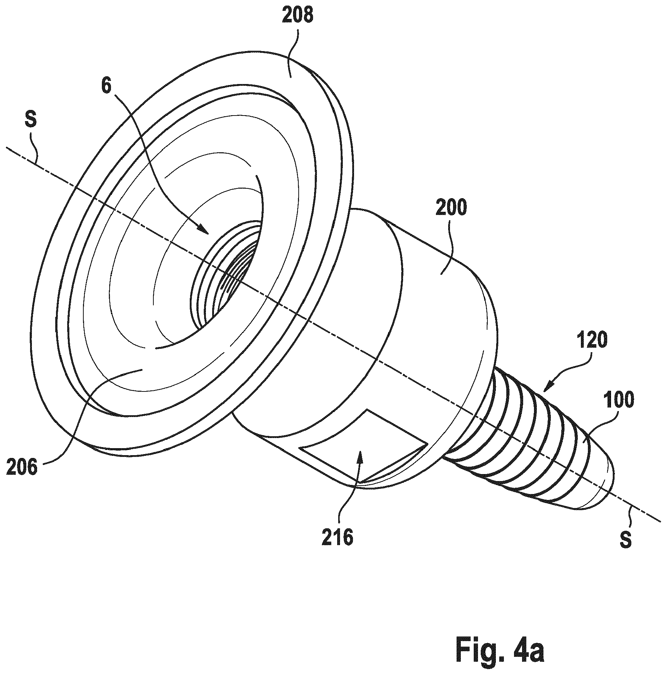

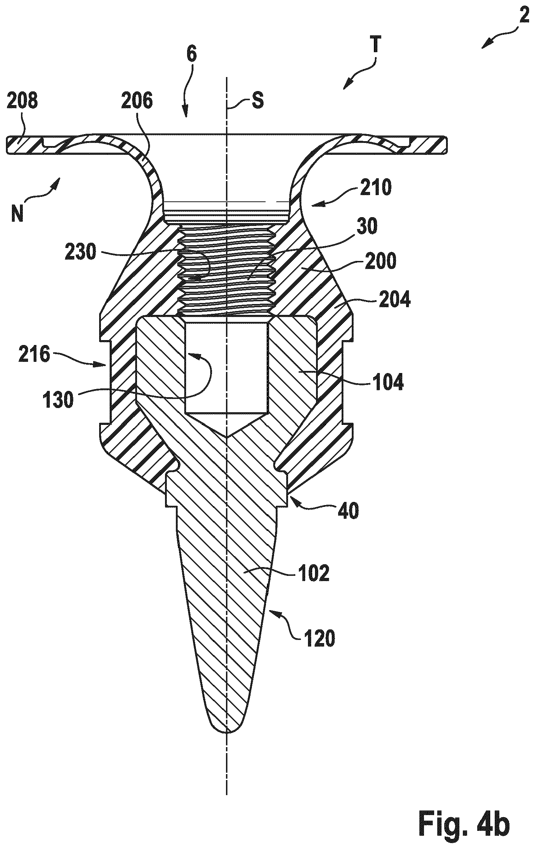

Figuren 4a und 4b zeigen ein weiteres Beispiel der Plug-Diaphragm 2. Im Unterschied zu den vorigen Figuren umfasst die gezeigte Plug-Diaphragm 2 keinen Befestigungsabschnitt, sondern eine Regelkontur 120 im Bereich des ersten Körpers 100. Alternativ oder zusätzlich zu der Regelkontur 120 umfasst der distale Abschnitt 102 des ersten Körpers 100 wenigstens eine der folgenden Außenkonturen: eine Schließkontur und eine Verschleißschutzkontur.

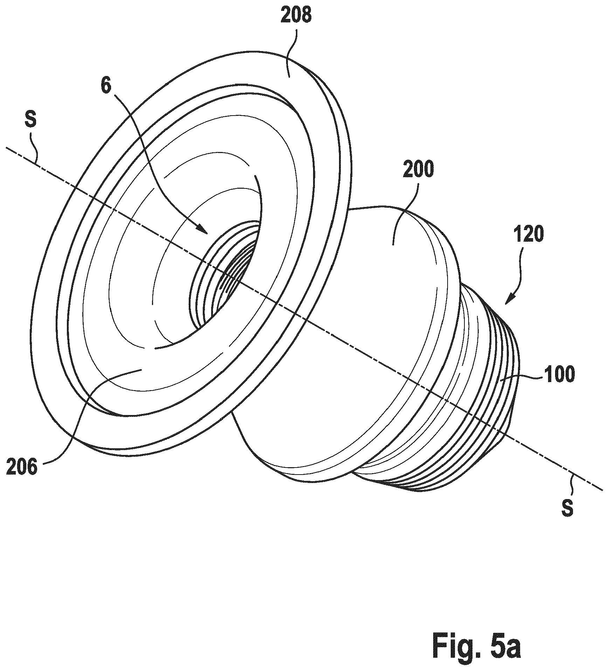

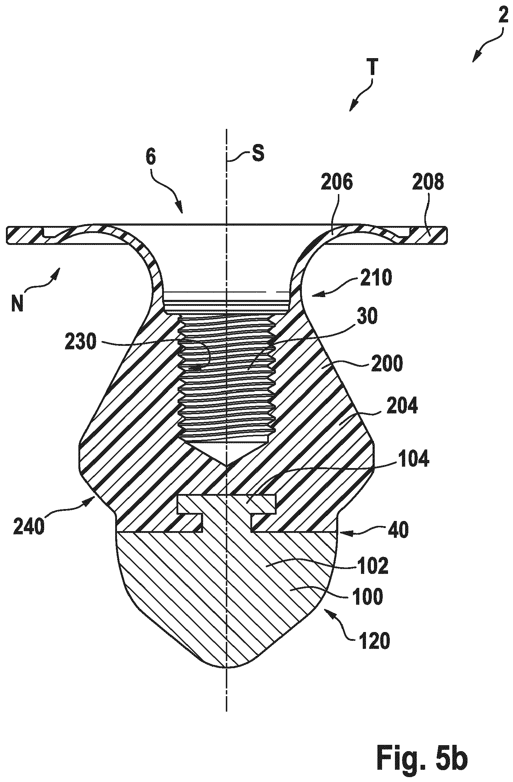

Figuren 5a und 5b zeigen die Plug-Diaphragm 2, bei der der Befestigungsabschnitt 30 im Unterschied zu den Figuren 4a+b ausschließlich in dem zweiten Körper 200 ausgeführt ist.

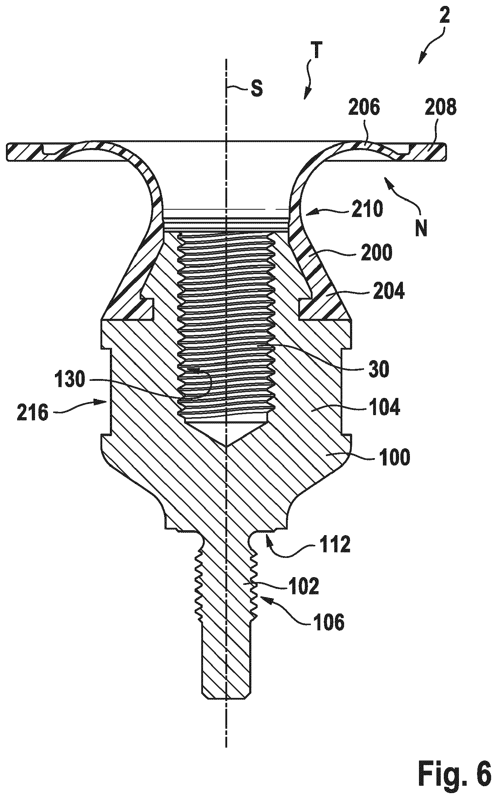

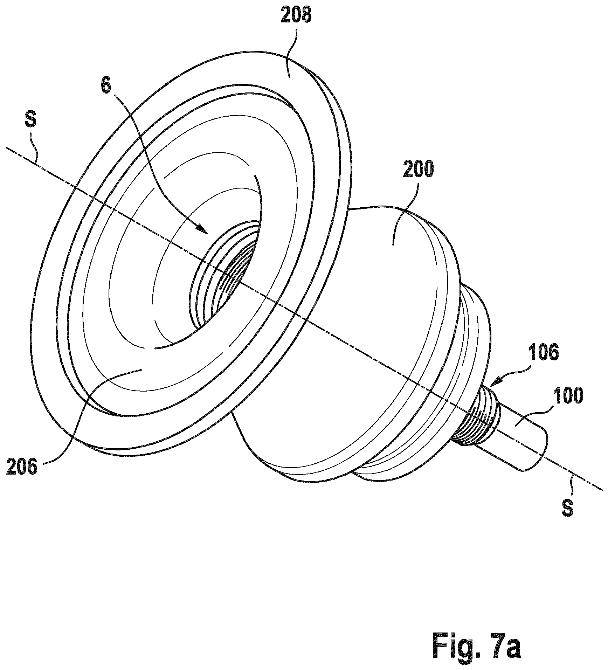

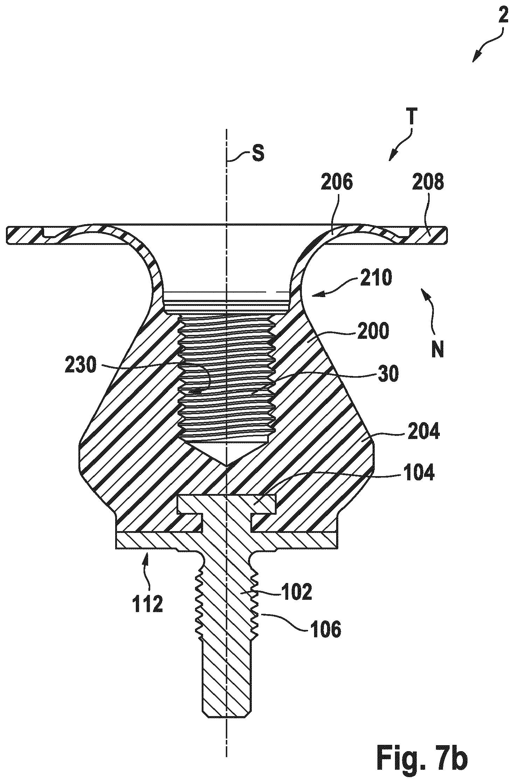

Figuren 6 und 7a+b zeigen Beispiele der Plug-Diaphragm 2 mit der Befestigungskontur 106. In der Figur 6 wird der Befestigungsabschnitt 30 allein durch den ersten Körper 100 bereitgestellt. Gemäß Figur 6 umfasst der zweite Körper 200 eine Dichtkontur 240, welche mit einem Ventilsitz zusammenwirkend das Prozessventil verschließen kann. In den Figuren 7a und 7b wird der Befestigungsabschnitt 30 allein durch den zweiten Körper 200 bereitgestellt.

## Patentansprüche

1. Ein Plug-Diaphragm (2) für ein Prozessventil (4) umfassend:
einen ersten Körper (100) mit einem einer Trockenseite (T) der Plug-Diaphragm (2) abgewandten distalen Abschnitt (102) und einem Halteabschnitt (104); und
einen zweiten Körper (200) mit einem inneren Abschnitt (204), welcher den Halteabschnitt (104) hält, indem der innere Abschnitt (204) den Halteabschnitt (104) formschlüssig umgibt, mit einem sich in Richtung der Trockenseite (T) an den inneren Abschnitt (204) anschließenden und zur Trockenseite (T) hin gekrümmten Membranabschnitt (206), und mit einem lateralen, sich nach außen hin an den Membranabschnitt (206) anschließenden Klemmabschnitt (208) .

2. Die Plug-Diaphragm (2) gemäß dem Anspruch 1, wobei der distale Abschnitt (102) eine Befestigungskontur (106), insbesondere ein Außengewinde, umfasst, welche zur Befestigung eines Tauschteils (300) ausgebildet ist.

3. Die Plug-Diaphragm (2) gemäß dem Anspruch 2, wobei ein Anschlagbereich (112) des ersten Körpers (100) für das Tauschteil (300) vorgesehen ist, welcher insbesondere metallisch ausgebildet ist.

4. Die Plug-Diaphragm (2) gemäß dem vorigen Anspruch, wobei der Anschlagbereich (112) gegenüber einem den Anschlagbereich (112) umgebenden Dichtabschnitt (212) des zweiten Körpers (200) versetzt abschließt, insbesondere zurückspringt.

5. Die Plug-Diaphragm (2) gemäß dem Anspruch 2 oder 3, wobei ein Dichtring (214), insbesondere aus PTFE oder TPE, lateral zwischen dem ersten Körper (100) und dem Tauschteil (300) angeordnet ist.

6. Die Plug-Diaphragm (2) gemäß einem der Ansprüche 2 bis 5, wobei der innere Abschnitt (204) des zweiten Körpers (200) eine äußere Angriffskontur (216) für ein Werkzeug aufweist.

7. Die Plug-Diaphragm (2) gemäß einem der Ansprüche 2 bis 6, wobei das Tauschteil (300) wenigstens eine der folgenden Außenkonturen umfasst: eine Regelkontur, einen Schließkontur (310) und eine Verschleißschutzkontur.

8. Die Plug-Diaphragm (2) gemäß einem der vorigen Ansprüche, wobei der distale Abschnitt (102) des ersten Körpers (100) wenigstens eine der folgenden Außenkonturen umfasst: eine Regelkontur (120), eine Schließkontur und eine Verschleißschutzkontur.

9. Die Plug-Diaphragm (2) gemäß einem der vorigen Ansprüche, wobei eine trockenseitige Öffnung (6) der Plug-Diaphragm (2) zu einem zum Anschluss einer Antriebsstange (28) ausgebildeten Befestigungsabschnitt (30), insbesondere zu einem Innengewinde, führt.

10. Die Plug-Diaphragm (2) gemäß dem vorigen Anspruch, wobei der Befestigungsabschnitt (30) zumindest abschnittsweise in dem ersten Körper (100) ausgeführt ist.

11. Die Plug-Diaphragm (2) gemäß einem der vorigen Ansprüche, wobei der erste Körper (100) aus einer Metalllegierung, insbesondere Edelstahl gefertigt ist, und wobei der zweite Körper (200) aus einem Kunststoff, beispielsweise PTFE, Polytetraflourethylen, oder TFM gefertigt ist.

12. Die Plug-Diaphragm (2) gemäß dem vorigen Anspruch, wobei zumindest abschnittsweise zwischen dem ersten Körper (100) und dem zweiten Körper (200) eine Zwischenschicht aus PFA, Perfluoroalkoxy, angeordnet ist.

13. Die Plug-Diaphragm (2) gemäß einem der vorigen Ansprüche, wobei der erste Körper (100) in dem Halteabschnitt (104) entlang der Stellachse (S) wenigstens eine rückspringende oder vorspringende Kontur und lotrecht zur Stellachse (S) wenigstens eine rückspringende oder vorspringende Kontur aufweist, und wobei ein gesintertes Material des zweiten Körpers (200) in die vorgenannten Konturen eingreift und beide Körper (100, 200) zueinander festlegt.

14. Die Plug-Diaphragm (2) gemäß einem der vorigen Ansprüche, wobei der Membranabschnitt (206) in einem Längsschnitt der Plug-Diaphragm (2) eine einzige Krümmung bzw. Wölbung hin zur Trockenseite (T) umfasst.

15. Ein Prozessventil (4) umfassend ein Plug-Diaphragm (2) gemäß einem der vorigen Ansprüche.
